Europäisches Patentamt

European Patent Office

Office européen des brevets

(11) Veröffentlichungsnummer: **0 369 499**

**A2**

(12) **EUROPÄISCHE PATENTANMELDUNG**

(21) Anmeldenummer: **89202514.9**

(22) Anmeldetag: **05.10.89**

(51) Int. Cl.⁵: **A23G 9/12, A23G 9/08**

(30) Priorität: **11.10.88 DE 3834536**

(43) Veröffentlichungstag der Anmeldung:
**23.05.90 Patentblatt 90/21**

(84) Benannte Vertragsstaaten:
**AT DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT AT**

(72) Erfinder: **Gawron, Klaus**
**Florastrasse 2**
**D-5100 Aachen(DE)**
Erfinder: **Leitner, Johann**
**Richard-Wagner-Strasse 7/1**
**A-9020 Klagenfurt(AT)**

(74) Vertreter: **Piegler, Harald, Dipl.-Chem. et al**
**Philips Patentverwaltung GmbH**
**Wendenstrasse 35 Postfach 10 51 49**
**D-2000 Hamburg 1(DE)**

(54) **Kältespeicher für die Speiseeisherstellung.**

(57) Die Erfindung betrifft einen Kältespeicher für die Speiseeisherstellung mit einem Behälter (1,2), der ein Latentwärmespeichermittel mit Phasenübergang fest-flüssig und umgekehrt auf der Basis des Eutektikums Kaliumchlorid/Wasser mit 19,54 Gew.% Kaliumchlorid als Kältespeichermittel (3) enthält. Aufgabe der Erfindung ist es, einen Kältespeicher mit einem Kältespeichermittel auf der Basis einer eutektischen KCl/$H_2$O-Mischung zu schaffen, der die gespeicherte Kältemenge bei der für die Speiseeisherstellung günstigen Schmelztemperatur von -11,5°C bis -13,0°C möglichst schnell an die Speiseeismasse abgibt. Diese Aufgabe wird erfindungsgemäß mit einem Kältespeicher der eingangs genannten Art gelöst, dessen Behälter zumindest teilweise aus Aluminium oder einer Aluminiumlegierung besteht, wobei das Kältespeichermittel Zusätze von Nitraten der Alkalimetalle, des Ammoniumions oder des Aluminiums enthält.

Fig. 1

## Kältespeicher für die Speiseeisherstellung

Die Erfindung betrifft einen Kältespeicher für die Speiseeisherstellung mit einem Behälter, der ein Latentwärmespeichermittel mit Phasenübergang fest-flüssig und umgekehrt auf der Basis des Eutektikums Kaliumchlorid/Wasser mit 19,54 Gew.% Kaliumchlorid als Kältespeichermittel enthält.

Ein derartiger Kältespeicher ist aus der US-PS 39 21 961 bekannt. Weiter sind aus der DE-OS 36 31 601 und der DE-OS 37 10 508 Kältespeichermittel bekannt, die in der Hauptsache aus einer eutektischen Mischung von KCl und $H_2O$ bestehen. Durch Zugaben von Äthanol ($C_2H_5OH$) oder Glycerin ($C_3H_8O_3$) kann der Schmelzpunkt dieser eutektischen Mischung auf einen für die Speiseeisherstellung günstigen Schmelzpunkt von -11,5°C bis -13,0°C eingestellt werden. Auf diese Weise ist es möglich, die besonders hohe Schmelzwärme des Eutektikums Kaliumchlorid/Wasser mit 19,54 Gew.% KCl auszunutzen, ohne auf den Schmelzpunkt dieses Gemisches von -10,7°C festgelegt zu sein.

Zusätzlich ist es bei der Speiseeisherstellung erforderlich, die gespeicherte Kältemenge möglichst schnell über die Behälterwand das Kältespeichers an die Speiseeismasse abzugeben. Dies gelingt besonders gut, wenn die für die Übertragung der Kältemenge zur Verfügung stehende Wandoberfläche möglichst groß ist und wenn die Wärmeleitfähigkeit des Wandmaterials hoch ist. Aus diesem Grunde sind Speicherbehälter aus Aluminium oder Aluminiumlegierungen gegenüber Behältern aus anderen Materialien besonders geeignet (Wärmeleitzahl Aluminium: 760 kJ/m h K; Stahl: 190 kJ/m h K). Ein Kältespeicher für die Speiseeisherstellung, dessen Behälter teilweise aus Aluminium oder einer Aluminiumlegierung besteht, ist aus dem DE/GM 86 14 199 bekannt.

Es ist jedoch auch bekannt, daß Salzlösungen, welche Chloride der Alkali- oder Erdalkalimetalle enthalten, gegenüber Aluminium oder Aluminiumlegierungen korrosiv sein können (F. Ritter: Korrosionstabellen metallischer Werkstoffe). Es sind ferner theoretische Überlegungen und Messungen mit stark verdünnten Chloridlösungen bekannt, bei denen das elektrochemische Potential untersucht wurde, welches zu Lochfraß auf Aluminiumoberflächen führen kann. Dabei wurde gefunden, daß Nitrate, Chromate, Acetate, Benzoate und Sulfate als Lochfraß-Inhibitoren wirken (J. Electrochem. Soc. 116 (1969), 906-910). Chloridlösungen wie im Fall der Kältespeicher sind jedoch bis zu 20-fach stärker konzentriert und haben daher deutlich andere Korrosionseigenschaften als stark verdünnte Chloridlösungen. Die Aluminiumoberflächen von Kältespeicherbehältern müssen also gegenüber konzentrierten Chloridlösungen geschützt werden. Diese gelingt beispielsweise dadurch, daß man die natürliche Oxidschicht auf Aluminium verstärkt, um angreifende Chloridionen am Durchdringen dieser Schicht zu hindern.

Aufgabe der Erfindung ist es also, einen Kältespeicher mit einem Kältespeichermittel auf der Basis einer eutektischen $KCl/H_2O$-Mischung zu schaffen, der die gespeicherte Kältemenge bei der für die Speiseeisherstellung günstigen Schmelztemperatur von -11,5°C bis -13,0°C möglichst schnell an die Speiseeismasse abgibt.

Diese Aufgabe wird erfindungsgemäß mit einem Kältespeicher der eingangs genannten Art gelöst, dessen Behälter zumindest teilweise aus Aluminium oder einer Aluminiumlegierung besteht, wobei das Kältespeichermittel Zusätze von Nitraten der Alkalimetalle, des Ammoniumions oder des Aluminiums enthält.

Versuche mit verschiedenen Zusätzen zum Kältespeichermittel bestehend aus der eutektischen Mischung von KCl und $H_2O$ haben gezeigt, daß die oben genannte günstige Schmelztemperatur erreicht werden kann, ohne daß das Kältespeichermittel gegenüber dem gut wärmeleitenden Aluminium korrosiv ist, wenn Nitrate der Alkalimetalle, des Ammoniumions oder des Aluminiums zur KCl-Lösung zugegeben werden. Nitrate wirken auf die natürliche oder künstliche Oxidschicht des Aluminiums weiter oxidierend und verstärken diese also noch. Die entstandene Oxidschicht besteht aus Böhmit ($Al_2O_3\ H_2O$) und ist im Bereich des pH-Wertes von 4,5 bis 8,4 stabil. Der pH-Wert der $KCl/H_2O$ Lösung liegt zwischen 6,5 und 7,0. Daher kann auf diese Weise der gefährliche Lochfraß von Chloridionen gegenüber dem Aluminium verhindert werden. Probestücke zeigen eine deutliche Verbesserung des Korrosionsverhaltens von nitrathaltigen Kältespeichermischungen mit KCl als Hauptbestandteil gegenüber Mischusngen ohne Nitratzusatz.

Bei einer bevorzugten Ausführungsform der Erfindung enthalt das Kältespeichermittel 78 bis 82 Gew.% Wasser, 17 bis 21 Gew.% Kaliumchlorid und 1 bis 5 Gew.% Kalium-, Natrium-, Ammonium- oder Aluminiumnitrat.

Ausführungsbeispiele der Erfindung sind in einer Zeichnung dargestellt und werden im folgenden näher beschrieben. In der Zeichnung zeigen

Fig. 1 einen Kältespeicher im Schnitt in Seitenansicht und

die Figuren 2, 3, 4 und 5 Diagramme, in denen Schmelzpunktniedrigungen einer Kaliumchlorid/Wasser-Lösung (19, 54 Gew.% KCl,

Schmelzpunkt -10,7°C) bei Zumischung verschiedener Mengen von eutektischen Lösungen von Nitraten in Wasser dargestellt sind.

Besonders günstige Kältespeichermittel nach der Erfindung bestehen aus

79,64 Gew.% Wasser
18,61 Gew.% Kaliumchlorid
1,75 Gew.% Natriumnitrat
Schmelzpunkt: -12,4°C
oder aus
81,76 Gew.% Wasser
17,00 Gew.% Kaliumchlorid
1,26 Gew.% Kaliumnitrat
Schmelzpunkt: -11,5°C
oder aus
78,78 Gew.% Wasser
18,09 Gew.% Kaliumchlorid
3,13 Gew.% Ammoniumnitrat
Schmelzpunkt: -12,9°C
oder aus
79,94 Gew.% Wasser
18,61 Gew.% Kaliumchlorid
1,45 Gew.% Aluminiumnitrat
Schmelzpunkt: -11,8°C.

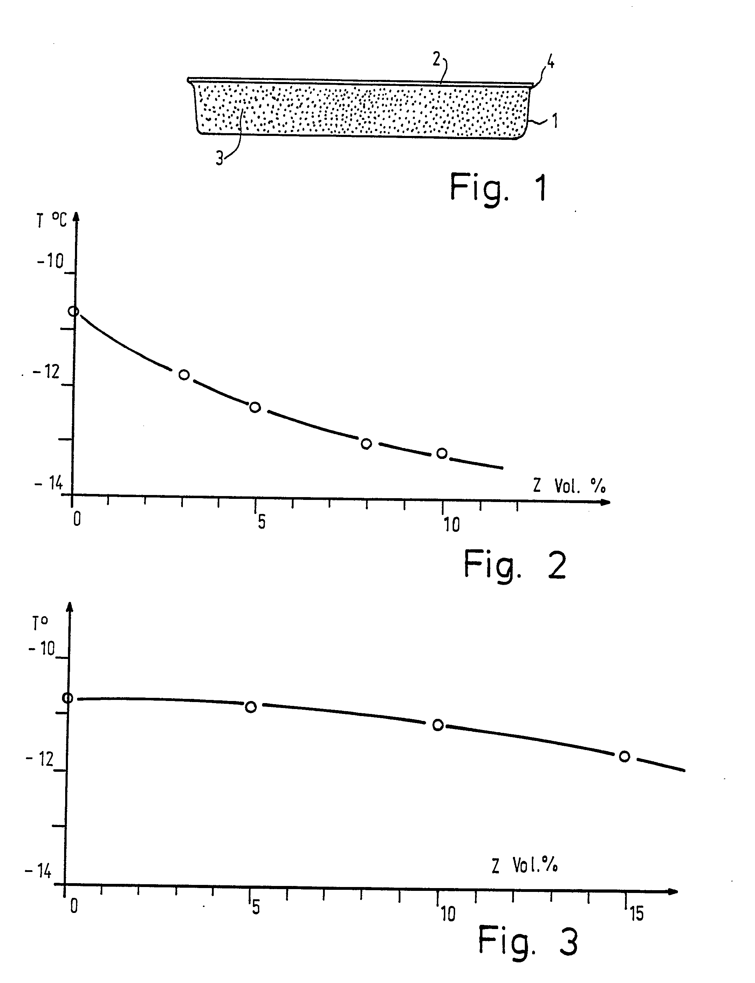

Ein in eine Speiseeismaschine einlegbarer Kältespeicher (Fig. 1) besteht aus einem flachen, zylindrischen Behälterteil 1 aus einem Ethylen/Vinylacetat-Copolymer (EVA), das mit einem Gemisch 3 nach einem der vorstehenden Beispiele gefüllt und mit einem Deckel 2 aus einer Aluminiumlegierung mit einer vorspringenden durchgehenden Umrandung 4 verschlossen ist. Der Deckel weist auch nach längerem Gebrauch keine Korrosionsschäden auf.

Gleichzeitig wird mit dem Zusatz von Nitraten der Schmelzpunkt einer $KCl/H_2O$-Lösung auf eine für die Speiseeisherstellung günstige Temperatur erniedrigt.

In den Diagrammen (Fig. 2, 3, 4 und 5) ist die Schmelztemperatur T in Grad Celsius über der jeweiligen Zumischung Z in Volumenprozent aufgetragen, und zwar

in Fig. 2 nach Zumischung einer $NaNO_3/H_2O$-Lösung (36,9 Gew.%) zur KCl-Lösung,

in Fig. 3 nach Zumischung einer $KNO_3/H_2O$-Lösung (9,7 Gew.%) zur KCl-Lösung,

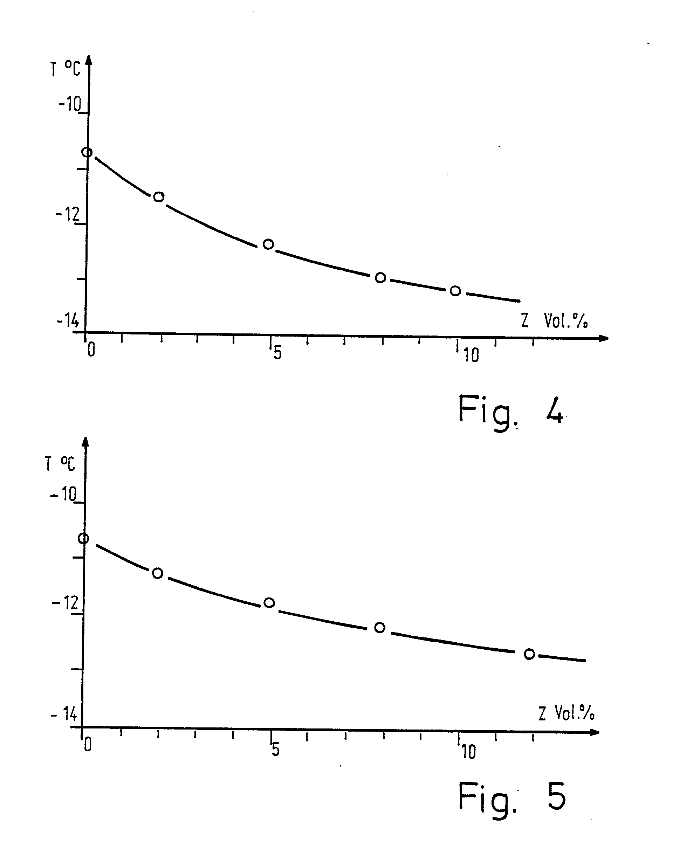

in Fig. 4 nach Zumischung einer $NH_4NO_3/H_2O$-Lösung (42, 3 Gew.%) zur KCl-Lösung und

in Fig. 5 nach Zumischung einer $Al(NO_3)_3/H_2O$-Lösung (30,5 Gew.%) zur KCl-Lösung.

## Ansprüche

1. Kältespeicher für die Speiseeisherstellung mit einem Behälter, der ein Latentwärmespeichermittel mit Phasenübergang fest-flüssig und umgekehrt auf der Basis des Eutektikums Kaliumchlorid/Wasser mit 19,54 Gew.% Kaliumchlorid als Kältespeichermittel enthält, dadurch gekennzeichnet,
daß der Behälter (1,2) zumindest teilweise aus Aluminium oder einer Aluminiumlegierung besteht und das Kältespeichermittel (3) Zusätze von Nitraten der Alkalimetalle, des Ammoniumions oder des Aluminiums enthält.

2. Kältespeicher nach Anspruch 1,
dadurch gekennzeichnet,
daß das Kältespeichermittel (3) 78 bis 82 Gew.% Wasser, 17 bis 21 Gew.% Kaliumchlorid und 1 bis 5 Gew.% Kalium-, Natrium-, Ammonium- oder Aluminiumnitrat enthält.

3. Kältespeicher nach Anspruch 1 oder 2,
dadurch gekennzeichnet,
daß das Kältespeichermittel (3) die Nitrate in Form von eutektischen Lösungen in Wasser enthält.

Fig. 1

Fig. 2

Fig. 3

1—II—PHD 88—210

Fig. 4

Fig. 5